# EUROPÄISCHE PATENTSCHRIFT

(11) **EP 1 359 358 B1**
(45) Veröffentlichungstag und Bekanntmachung des Hinweises auf die Patenterteilung: **14.06.2006**
(21) Anmeldenummer: 03009684.6
(22) Anmeldetag: 30.04.2003
(51) Int. Cl.: F16L 39/00, F16L 9/18, F16L 7/00, F16L 45/00

(54) **Rohreinheit**
Pipe assembly
Assemblage de tuyaux

(30) Priorität: 03.05.2002 DE 20207066 U; 07.08.2002 DE 20212078 U
(43) Veröffentlichungstag der Anmeldung: 05.11.2003
(73) Patentinhaber: Bächle, Dieter, 8597 Landschlacht (CH)
(72) Erfinder: Bächle, Dieter, 8597 Landschlacht (CH)
(74) Vertreter: Hiebsch, Gerhard F.

(56) Entgegenhaltungen:
- EP-A- 1 128 121
- DE-A- 2 411 475
- DE-A- 3 800 245
- US-A- 1 909 075
- US-A- 2 366 975
- US-A- 4 339 054
- US-A- 6 145 545

## Beschreibung

Die Erfindung betrifft eine Rohreinheit aus wenigstens zwei etwa koaxialen Leitungsrohren, von denen ein Leitungsrohr zum Führen eines -- insbesondere gasartigen -- Strömungsmediums ausgebildet ist, nach dem Oberbegriff des Patentanspruches 1. Eine gattungsbildende Rohreinheit ist aus DE 2 411 475 A bekannt.

Die DE 24 11 475 A beschreibt eine See-Verladeanlage mit einer Mehrzahl von Teilanlagen für kryogene Stoffe, insbesondere für verflüssigtes Erdgas. In bzw. mit diesen Teilanlagen werden diese Stoffe aufbereitet, gelagert oder verladen, und sie umfassen beispielsweise eine Verflüssigungsanlage, mindestens einen Vorratsbehälter und wahlweise wenigstens eine zusätzliche Verladeboje sowie zwischen den einzelnen Teilanlagen verlaufende Leitungen für den Flüssigkeitstransport und Leitungen für den Druckausgleich und die Rückführung von Dämpfen, die aus der Flüssigkeit entweichen. Diese Leitungen für den Flüssigkeitstransport und die Leitungen für die Rückführung der Dämpfe bestehen aus stabilen, durch drehbare Kupplungen untereinander vor Ort verbundenen, koaxialen Rohren, die eine durchgehende äußere Rohrwandung und eine innere Rohrwandung mit abgedichteter axialer Schwindfuge aufweisen; der innere koaxiale Raum dient dem Transport der Flüssigkeit und der ringförmige äußere koaxiale Raum zur Rückführung der Dämpfe. Das äußere Rohr ist von einer rohrförmigen Verkleidung umgeben, die mit dem Rohr einen Aufnahmeraum für Isoliermatrial begrenzt. Labyrinthdichtungen verhindern das Eindringen von Seewasser in die Isolierung. Die innere Rohrwandung wird durch wärmeisolierte ringartige Abstandsstücke in gleichmäßigem Abstand von der äußeren Rohrwandung gehalten. An den Enden der Rohre sind diese Abstandsstücke so ausgebildet, dass sie eine axiale Verschiebung des inneren Rohres gegenüber dem äußeren Rohr an deren Enden verhindern. Drehbare Kupplungen für das Verdrehen der koaxialen Rohre gegeneinander weisen wälzlagerfreie feste Lagerflächen auf, und zu beiden Seiten der drehbaren Kupplung ist das innere Rohr in Bezug auf das äußere Rohr durch eine spinnenförmige Abstützung in seiner axialen und radialen Lage fixiert.

Ein Leitungsrohr ist nach US-A-6,145,545 mit einem koaxialen Innenrohr versehen; beide begrenzen einen Fließraum. An das äußere Leitungsrohr sind Radialstege angeformt, die der Außenfläche des Innenrohres aufsitzen, d.h. die beiden Rohrpartner sind gegeneinander verdrehbar.

Eine Vorrichtung mit wenigstens zwei durch eine Einsatzeinrichtung koaxial verbundenen Hohlprofilen -- insbesondere mit aus Kunststoff geformten zylindrischen Rohren -- beschreibt die US-A-2 714 395; zwischen dem Endbereich eines äußeren Rohres und eines koaxial in dieses eingeschobenen inneren Rohres ist ein deren zylindrischen Zwischenraum ausfüllender Klemmring eingesetzt. Dieser Klemmring wird von einem verformbaren Band aus mehreren aneinander gelenkten Flachstegen gebildet, von denen -- in Einbaulage radial verlaufende -- Greifflansche abragen. Die Gelenkstellen der Flachstege schmiegen sich an die Innenfläche des äußeren Rohres an, die erwähnten Greifflansche erfassen klemmend das Innenrohr.

Die US-A-4 607 665 offenbart ein federndes Verbindungsorgan in Form eines in Draufsicht etwa dreiecksförmigen Drahtbügels, der zwischen beide Rohre als Klemmorgan eingesetzt wird. Die Ecken des erwähnten Dreiecks werden in Ausnehmungen des äußeren Rohres eingesteckt, und die Dreiecksseiten liegen klemmend dem inneren Rohrelement an. Des besseren Haltes wegen ist zudem aus jeder der Dreiecksseiten des Drahtbügels eine in Draufsicht U-artige Ausformung herausgebogen, die sich mit ihrem freien Ende an der Innenfläche des Außenrohres abstützt.

Der Erfinder hat sich das Ziel gesetzt, eine derartige Anlage auf einfache Weise zusammenzustellen sowie den Schutz des jenes Strömungsmittel führenden Rohres zu verbessern.

Zur Lösung dieser Aufgabe führt die Lehre des unabhängigen Anspruches; die Unteransprüche geben günstige Weiterbildungen an.

Erfindungsgemäß ist das vom Außenrohr größeren Durchmessers umgebene Leitungsrohr mit diesem koaxial zu einem doppelwandigen Rohr durch zwischen Innen- und Außenrohr verlaufende Stegelemente zusammengefügt, welche an die Rohrpartner angeformt sind. Zudem ist das doppelwandige Rohr mit einem ebenfalls doppelwandigen Knieabschnitt verbunden; die Mündungsränder der koaxialen Rohrpaarungen liegen aneinander, und die beiden Innenrohre sind durch einen Dichtungsring verbunden, der einen längsschnittlich U-förmigen Stülprand anbietet.

Die Verbindung zwischen dem Rohrpartner wird durch radiale rippenartige Rohrstege zwischen Außenrohr und Innenrohr hergestellt, die achsparallel verlaufen und an wenigstens einen der Rohrpartner angeformt sind.

Im übrigen überragt das Leitungsrohr als Innenrohr das koaxiale Außenrohr um ein etwa dem Innenrohrdurchmesser entsprechendes Maß axial und dieser überstehende Rohrteil wird mit dem Dichtungsring verbunden.

Das Leitungsrohr soll als Innenrohr am Übergang zu dem überragenden Rohrteil mit einer Ringstufe versehen und an dieser der überragende Rohrteil nach außen versetzt sein; diese Ringstufe bildet eine Anschlagfläche für den Dichtungsring, der axial eingeschoben zu werden vermag und dann festsitzt. Die Ringstufen sollen aber bevorzugt auch eine Anschlagfläche für den Mündungsrand des anderen Innenrohres darstellen, welches dann mit einem Endabschnitt partiell im Dichtungsring lagert.

Nach einem weiteren Merkmal der Erfindung ist der Stülprand des Dichtungsringes an dessen dem Knieabschnitt zugeordneten Ende vorgesehen und nimmt den Mündungsrand des Innenrohres auf; er stellt für diesen eine Steckverbindung dar. An diesen Stülprand soll zudem ein Ringkörper des Dichtungsringes angeformt sein, der außen- und/oder innenseitig zueinander versetzte Ringanformungen aufweist, welche die an den Dichtungsring anschließenden Bauteile klemmend zu halten helfen. Als günstig hat sich auch erwiesen, das eine Innenrohr des doppelwandigen Knieabschnitts mit einer längsschnittlichen Innenstufe zu versehen.

Während die Innenrohre erfindungsgemäß also durch den Dichtungsring verbunden werden, sind die beiden Außenrohre durch eine Schnappschelle verbunden. Letztere soll als offener Ring mit zwei radial abragenden Hakenenden ausgebildet sein, welch letztere in Verschlusslage einander hintergreifen. Dabei kann das eine Hakenende ein Radialsteg sein, der von einem Hakenkopf eines zur Schellenebene nach außen versetzten Steges hintergriffen ist. Diesen Steg soll in Verschlusslage eine ihn fortsetzende Rückenleiste der Pultfläche eines Ansatzes des zuvor genannten Radialsteges aufliegen, wodurch eine sehr sichere Lage entsteht.

Erfindungsgemäß ist das Leitungsrohr mit von einem Deckelelement verschließbaren Durchbruch versehen, der einen ringartigen Kragen als Lager für das Deckelelement aufweist; dem Kragen sind zumindest zwei -- vorteilhafterweise auf einer gemeinsamen Durchmessergeraden des Durchbruchs liegende -- Formstege zugeordnet, die das Deckelelement in seiner Schließlage wenigstens teilweise übergreifen. Jene Formstege sind bevorzugt an die Außenfläche des Leitungsrohres angeformt sowie mit einer zum Durchbruch weisenden Nase versehen, die mit der Kragenkante des Kragens einen Spalt bildet sowie in Schließlage des Deckelelements ein von diesem radial abragendes Kragorgan übergreift. Hierdurch wird auf einfache Weise eine Festlegung des Deckelelements ermöglicht; dieses wird auf die freie Kragenkante des Kragens aufgelegt sowie zwischen diese und die Nasen der Formstege eingeschoben.

Im Rahmen der Erfindung liegen verschiedene Ausgestaltungen des Kragorgans, welches ein etwa ringförmiger Deckelkragen oder eine Kraglasche ist. Von besonderer Bedeutung ist ein als Schließlasche ausgebildetes Kragorgan, von deren Oberfläche eine radiale Anschlagwand für den Formsteg des Leitungsrohres aufragt; beim Drehen des Deckelelements dient jene Anschlagwand zum Fixieren des Deckelelements. Zudem kann in die Oberfläche der Schließlasche eine Radialnut als Rastpartner für den Formsteg eingeformt sein; deren Breite entspricht etwa der Dicke des Formsteges und deren eine Nutwand bildet jene Anschlagwand. An letztere kann auch eine von dieser abwärts gerichtete Pultfläche als Abschnitt der Oberfläche der Schließlasche anschließen.

Nach einem weiteren Merkmal der Erfindung ist das Deckelelement mit einem in Draufsicht ringförmigen Deckelkragen der maximalen Höhe versehen, dessen rohrwärtiger Rand von zwei Teilkreiskonturen bestimmt ist; diese gehen von zwei etwa auf einer Diametralgeraden liegenden Tiefpunkten aus. Zudem schließt an den rohrwärtigen Rand des Deckelkragens eine Formhaube an, die kalottenartig ausgebildet und vom Deckelkragen umgeben ist. Diese Formhaube soll im Zentrum des Deckelkragens die Firstlippe des Deckelelementes überragen.

Als günstig hat es sich erwiesen, bevorzugt drei Kraglaschen und eine Grifflasche am kreisförmigen oberen Rand des Deckelelements in gleichen Kreisabständen verteilt anzubringen; diese sollen den Befestigungsvorgang erleichtern.

Bei einer besonderen Ausgestaltung der Erfindung, für gesondert Schutz begehrt wird, verlaufen die Längsachsen zweier Rohrabschnitte zueinander in einem Winkel; in dem von ihnen gebildeten Rohrknie ist ein zwickelartiger Knieabschnitt vorgesehen und an seiner Außenfläche mit dem Durchbruch versehen. Dessen Durchbruchsachse soll mit den Längsachsen der beiden Rohrabschnitte jeweils einen Winkel von etwa 45° bestimmen. Hier ragt erfindungsgemäß von jedem der Rohrabschnitte einer der Formstege auf, und an einen der Rohrabschnitte sind seitliche Rohrstümpfe angeformt, deren gemeinsame Achse bevorzugt die Längsachse von einem der Rohrabschnitte kreuzt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: eine Schrägsicht auf eine erfindungsgemäße Rohreinheit;
- Fig. 2:: die Rohreinheit der Fig. 1 in teilweise auseinandergezogenem Zustand;
- Fig. 3, 4:: jeweils einen Längsschnitt durch die Schrägsicht der Fig. 1 bzw. Fig. 2;
- Fig. 5:: einen vergrößerten Ausschnitt aus Fig. 3;
- Fig. 6, 7:: vergrößerte Ausschnitte aus Fig. 5 nach deren Pfeil VI bzw. VII;
- Fig. 8:: eine Schrägsicht auf eine teilweise dargestellte Dichtung;
- Fig. 9:: die gegenüber Fig. 8 vergrößerte Frontansicht der Dichtung;
- Fig. 10:: den diametralen Längsschnitt durch die Dichtung als vergrößerte Draufsicht auf Fig. 8;
- Fig. 11:: einen vergrößerten Ausschnitt aus Fig. 10 nach deren Pfeil XI;
- Fig. 12:: eine Schnappschelle der Rohreinheit in Stirnansicht;
- Fig. 13:: die Draufsicht auf die Schnappschelle der Fig. 12;
- Fig. 14:: die vergrößerte Draufsicht auf Fig. 13;
- Fig. 15, 16:: vergrößerte Schnitte durch Fig. 12 nach deren Linie XV-XV bzw. XVI-XVI;
- Fig. 17:: einen vergrößerten Teilschnitt durch Fig. 12 nach deren Feld XVII;
- Fig. 18:: einen vergrößerten Teilschnitt durch Fig. 12 nach deren Feld XVIII;
- Fig. 19, 24:: jeweils andere Ausgestaltungen des Doppelwandbogens in axial geschnittener Schrägsicht;
- Fig. 20, 25:: die Frontansicht des gesamten Doppelwandbogens aus Fig. 19 bzw. 24;
- Fig. 21, 26:: die teilweise geschnittene Seitenansicht des Doppelwandbogens aus Fig. 20 bzw. Fig. 25;
- Fig. 22, 23:: jeweils einen vergrößerten Ausschnitt aus Fig. 21 nach deren Pfeil XXII bzw. XXIII;
- Fig. 27:: die Draufsicht auf Fig. 26 nach deren Pfeil XXVII;
- Fig. 28, 29:: jeweils einen vergrößerten Ausschnitt aus Fig. 26 nach deren Pfeil XXVIII bzw. XXIX;
- Fig. 30:: einen gegenüber Fig. 21, 26 vergrößert sowie teilweise geschnitten dargestellten anderen Doppelwandbogen in Seitenansicht;
- Fig. 31:: die Frontansicht zu Fig. 30;
- Fig. 32, 33:: jeweils einen Ausschnitt aus Fig. 30 nach deren Pfeil XXXII bzw. XXXIII;
- Fig. 34:: eine Schrägsicht auf ein Rohrknie eines Leitungsrohres für ein gasartiges Strömungsmittel mit im Kniebereich vorgesehenem Durchbruch für einen Rohrdeckel;
- Fig. 35:: den vergrößerten Längsschnitt durch Fig. 34;
- Fig. 36:: die Stirnansicht zu Fig. 35;
- Fig. 37:: eine Schrägsicht auf ein Rohrstück mit Rohrdeckel;
- Fig. 38:: ein Detail aus Fig. 37;
- Fig. 39:: die Draufsicht zu Fig. 38;
- Fig. 40, 42:: jeweils einen Diametralschnitt durch Fig. 39 nach deren Linie XXXX - XXXX bzw. XXXXII - XXXXII;
- Fig. 41:: einen vergrößerten Ausschnitt aus Fig. 40 nach deren Pfeil XXXXI;
- Fig. 43:: einen vergrößerten Ausschnitt aus Fig. 42;
- Fig. 44:: einen vergrößerten Ausschnitt aus Fig. 39 nach deren Pfeil XXXXIV;
- Fig. 45:: eine vergrößerte Schrägsicht auf einen Teil der Fig. 37, 38.

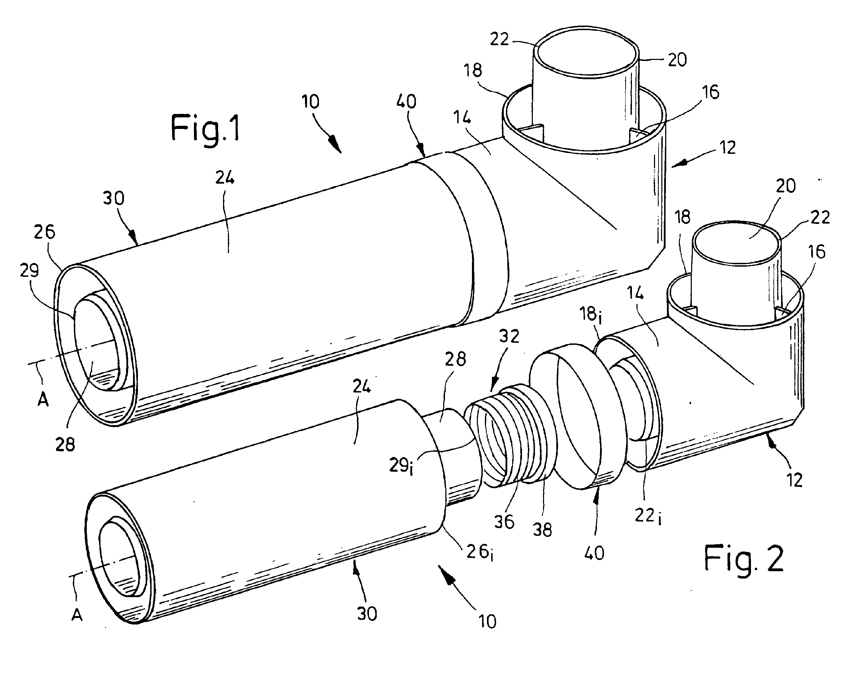

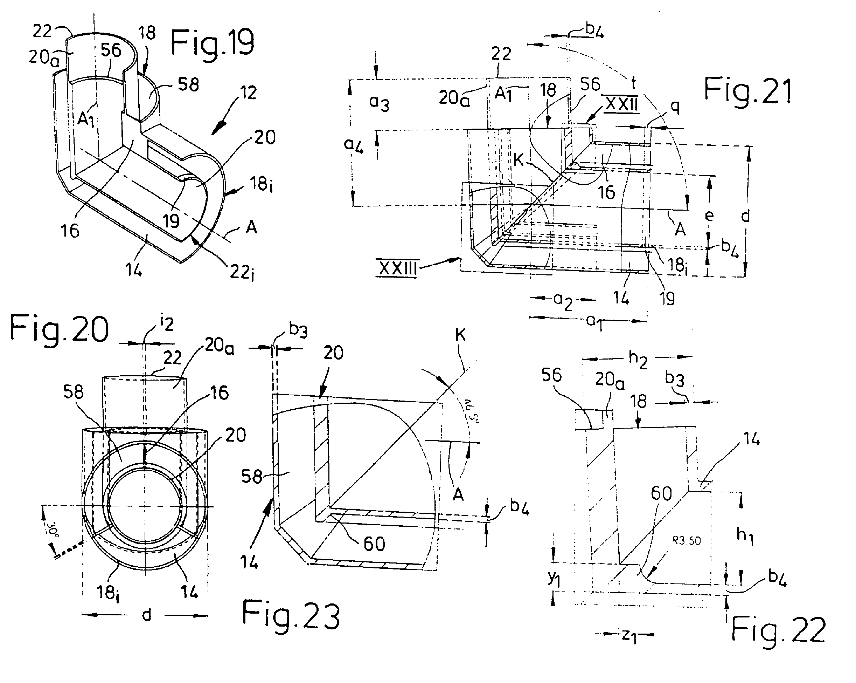

Eine Rohreinheit 10 weist nach Fig. 1, 2 zum einen einen Bogenabschnitt 12 aus einem längsschnittlich winkelartigen Außenrohr 14 -- des beispielsweise aus Fig. 19 hervorgehenden Außendurchmessers d von 100 mm -- sowie einem mit diesem durch Radialstege 16 verbundenen und seinen in Fig. 1, 2 aufwärts gerichteten Mündungsrand 18 überragenden koaxialen Innenrohr 20 des Innendurchmessers e von 56 mm auf; der obere Mündungsrand des Innenrohres 20 ist mit 22 bezeichnet. Zum anderen enthält die Rohreinheit 10 einen ebenfalls aus einem Außenrohr 24 des Außendurchmessers d₁ von 100 mm und einem an dieses durch Radialstege 16ₐ angefügten Innenrohr 28 bestehenden -- Anschlussstutzen 30. Der Innendurchmesser e₁ des Innenrohres misst ebenfalls 56 mm, und die Rohre 14, 16, 24, 28 bestimmen eine gemeinsame Längsachse A.

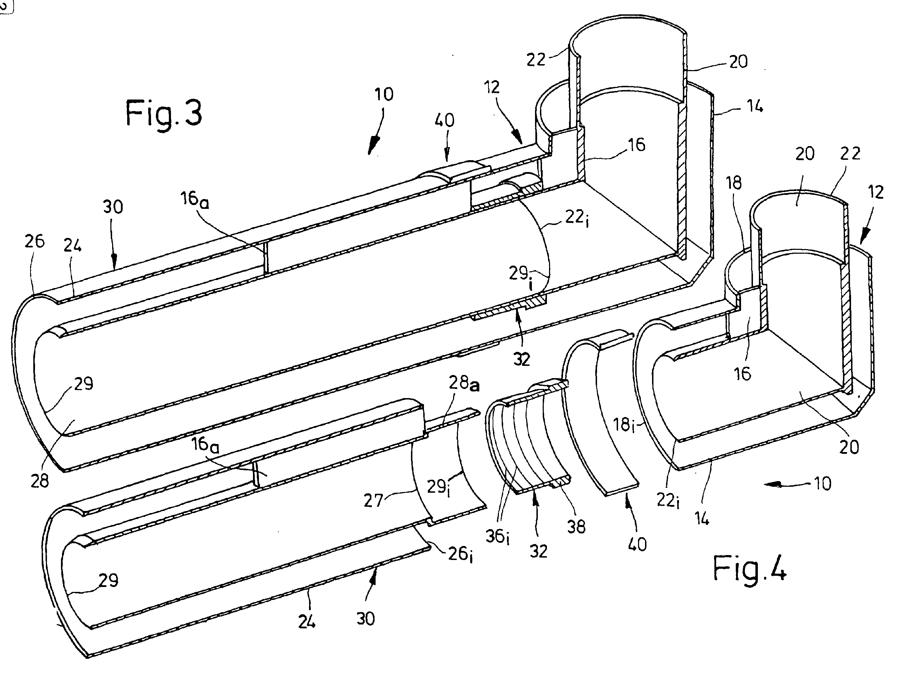

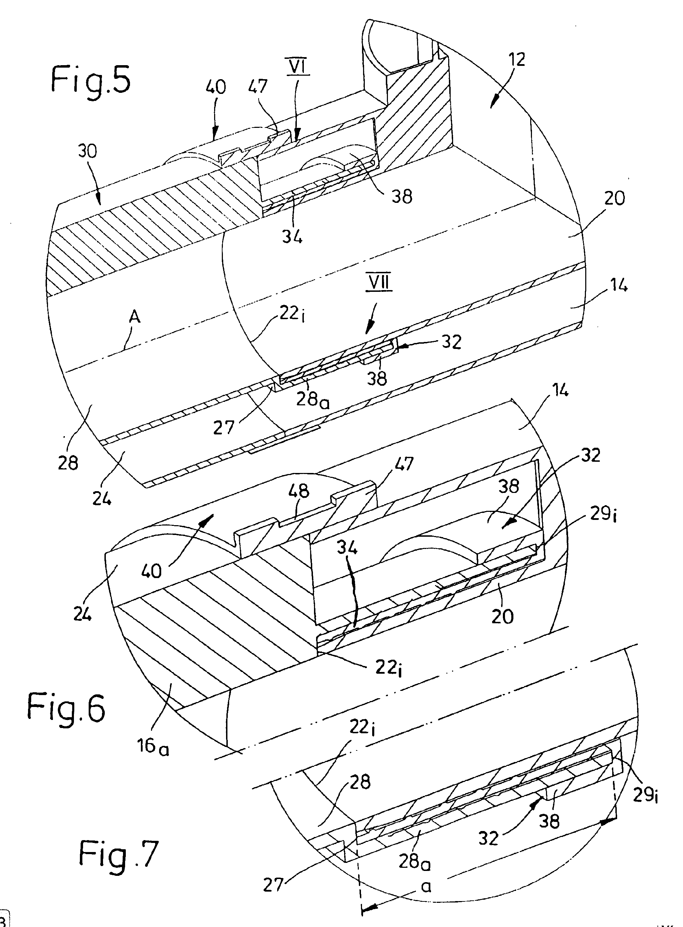

Das Innenrohr 28 des Anschlussstutzens 30 kragt gemäß Fig. 2 als Stützteil mit seinem innenliegenden Mündungsrand 29ᵢ über den zum Bogenabschnitt oder Doppelwandbogen 12 weisenden Mündungsrand 26ᵢ seines Außenrohres 24 hinaus und ist gemäß Fig. 4, 7 in einem Abstand a zu jenem inneren Mündungsrand 29ᵢ bei einer Ringstufe 27 nach außen -- Rohrteil 28ₐ -- versetzt; an die Ringstufe 27 schlägt beim Zusammenfügen der Abschnitte 12, 30 der innere Mündungsrand 22ᵢ des anderen Innenrohres 20 fluchtend an. Im übrigen liegen die inneren Mündungsränder 18ᵢ, 22ᵢ des Doppelwandbogens 12 ebenso in einer gemeinsamen Radialebene wie die äußeren Mündungsränder 26, 29 des Anschlussstutzens 30.

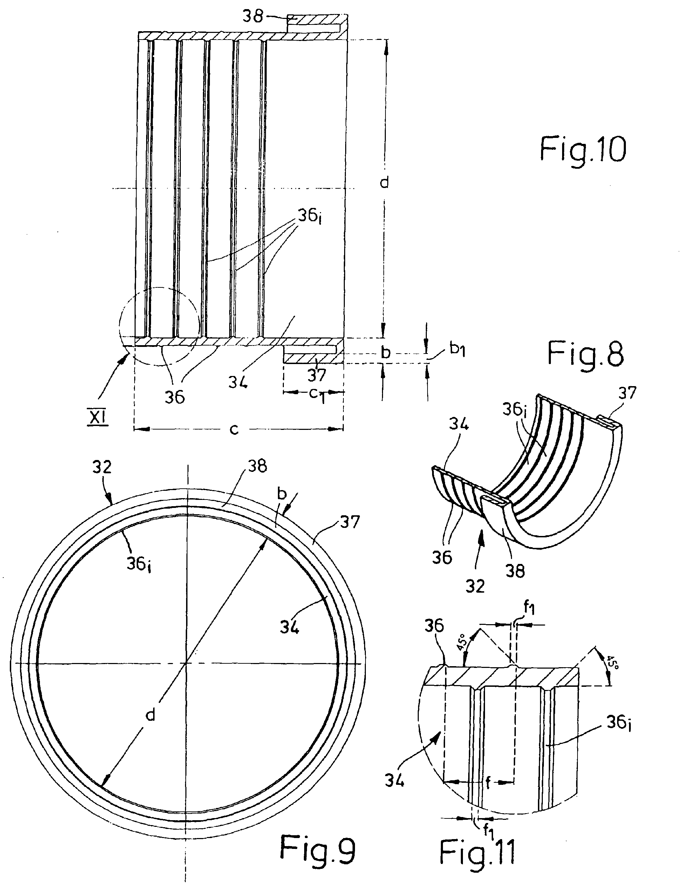

Das Innenrohr 20 ist durch einen -- beide Innenrohre 20, 28 umfangenden -- Dichtungsring 32 mit dem anderen Innenrohr 28 lösbar verbunden. An den Ringkörper 34 des Dichtungsringes 32 sind außen- und innenseitig -- zueinander versetzte -- Ringanformungen 36, 36ᵢ angefügt. Zum Doppelwandbogen 12 hin bietet dieser Dichtungsring 32 einen -- die innere Mündungskante 29ᵢ des Innenrohres 28 übergreifenden -- längsschnittlich U-förmigen Stülprand 38 an. Im Beispiel der Fig. 8 bis 11 mißt der innere Durchmesser d₂ des Dichtungsringes 32 etwa 60 mm bei einer Breite b des Stülprandes 38 von etwa 10 mm und einer Breite b₁ von dessen Außenwand 37 von 4 mm.

Die axiale Länge c des Ringkörpers 34 beträgt hier 41,5 mm, die Länge c₁ des Stülprandes 38 etwa 12 mm sowie die Höhe c₂ der Ringanformungen 36, 36ᵢ hier weniger als 1 mm bei einem axialen Abstand f von nahezu 6 mm und einer Kopfweite f₁ von 0,5 mm.

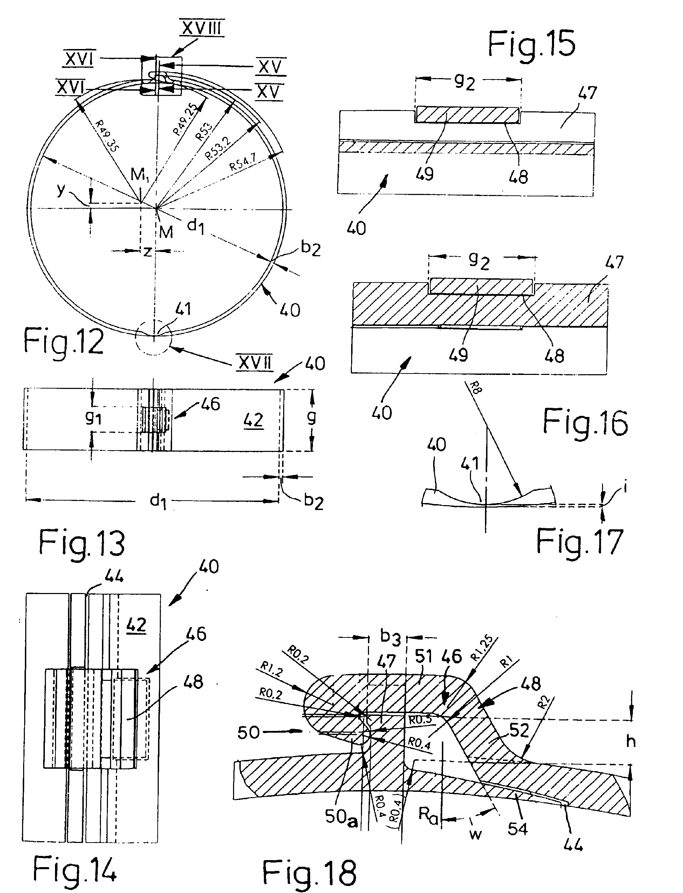

Um die einander zugeordneten Mündungsränder 20ᵢ, 26 der beiden Außenrohre 14, 24 ist eine Schnappschelle 40 gelegt, deren Innendurchmesser e₂ gemäß Fig. 12 hier 100 mm bei einer Wanddicke b₂ von 3 mm und einer Breite g der Schnappschelle 40 von 25 mm. Inmitten dieser ist an die Oberfläche 42 -- beidseits einer Trennlinie 44, der ein flexibel gestalteter Scharnierbereich 41 geringer Dicke i von 0,25 mm gegenüberliegt -- eine Verschlusspaarung 46 aus einem in Fig. 5, 6 verdeutlichten Radialsteg 47 der Höhe h von nahezu 2 mm und der Dicke i₁ von 1,5 mm einem mit diesem zusammenwirkenden Hakenprofil 50 der axialen Breite g₁ von etwa 10 mm angeformt (Fig. 13). Vom Radialsteg 47 ragt ein freier Endstreifen 54 ab, der eine Pultfläche anbietet, auf der in Verschlusslage im Bereich des anderen Schellenendes auflastet (Fig. 18).

Die in Fig. 12, links, angegebenen Radien R von 49,25 mm und 49,35 mm setzen an einem exzentrischen Punkt M₁ an, der um die Maße y (6 mm) und z (2 mm) gegenüber der Ringmitte M verschoben ist.

Der Radialsteg 47 bietet eine zinnenartige Mittenausnehmung 48 der Breite g₂ von 10 mm an, in der jenes Hakenprofil 50 geführt wird; letzteres hintergreift mit seinem Hakenkopf 50ₐ eine ihrerseits querschnittlich hakenartige Frontleiste 49 des Radialsteges 47. Dieser Hakenkopf 50ₐ ragt von einem Steg 51 ab, der in eine -- in einem Winkel w von etwa 30° zur Radialen Rₐ geneigte -- Rückenleiste 52 des Hakenprofils 50 übergeht.

Der äußere Durchmesser d des Außenrohres 14 des in Fig. 19, 20 wiedergegebenen Doppelwandbogens 12, dessen beide Achsen A, A₁ zueinander in einem nahezu rechten Winkel t von 93° verlaufen, misst 100 mm bei einer Wanddicke b₃ von 4 mm; die mittlere Länge a₁ des in Fig. 19 rechten Rohrschenkels beträgt 94 mm, die dazu parallele Länge a₂ des Innenrohres 20 nur 52,5 mm. Der rechte Mündungsrand 22ᵢ ist mit einer äußeren Anfasung 19 axialer Länge q von 5 mm ausgestattet.

Der Überstand a₃ des aufwärts weisenden Abschnittes des Innenrohres 20 zum Mündungsrand 18 beträgt bei dem in Fig. 19, 21 linken Schenkel 20ₐ des Innenrohres 20 hier 40 mm bei einer Gesamtlänge a₄ dieses Schenkels 20ₐ ab Längsachse A von 98 mm. Im übrigen ist des letzteren Wanddicke b₄bis zu einer längsschnittlichen Innenstufe 56 im Bereich des Mündungsrandes 18 des Außenrohres 14 -- mit 9 mm mehr als doppelt so dick wie im oberen Endbereich bzw. im rechten Schenkelbereich des Innenrohres 20. So entsteht im Doppelwandbogen 12 ein -- durch jene Radialstege 16 der Dicke i₂ von 2 mm unterbrochener -- Ringraum 58 - unterschiedlicher radialer Höhen h₁ bzw. h₂ von 18 mm bzw. 14,5 mm --, der nahe an der in Fig. 21, 23 mit K bezeichneten Knielinie des Doppelwandbogens 12 eine Stufung 60 an der Außenfläche des Innenrohres 20 enthält. Im Längsschnitt der Fig. 22 sind die Länge z₁ von 4 mm sowie die Höhe y₁ von 5,5 mm der Stufung 60 angedeutet.

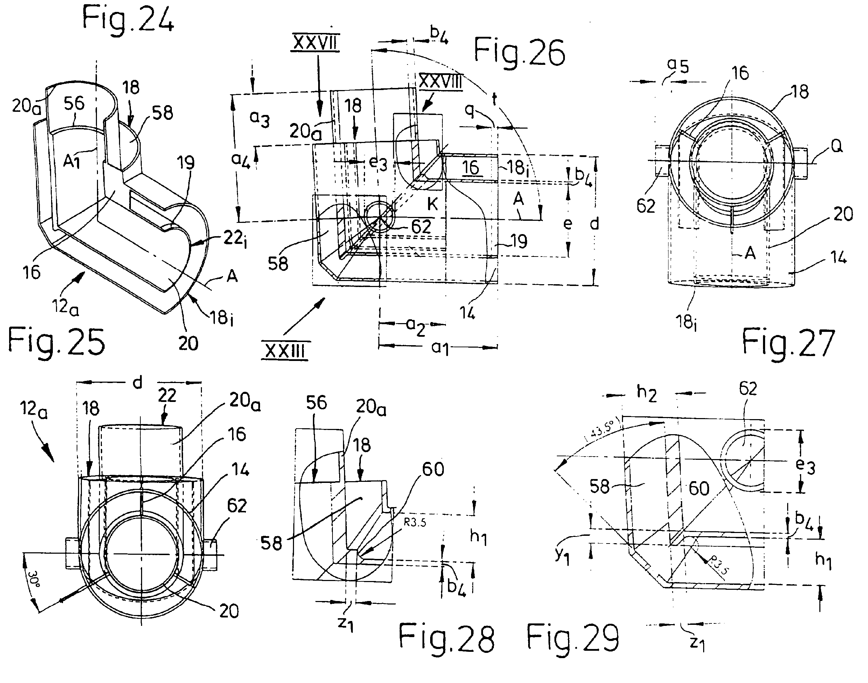

Der Doppelwandbogen 12ₐ der Fig. 24 bis 28 ist im Bereich der Knielinie K mit zwei seitlichen Stutzen 62 des äußeren Durchmessers e₃ von 24 mm und der freien Länge a₅ von etwa 10 mm versehen, die miteinander fluchten und eine Drehachse Q bestimmen.

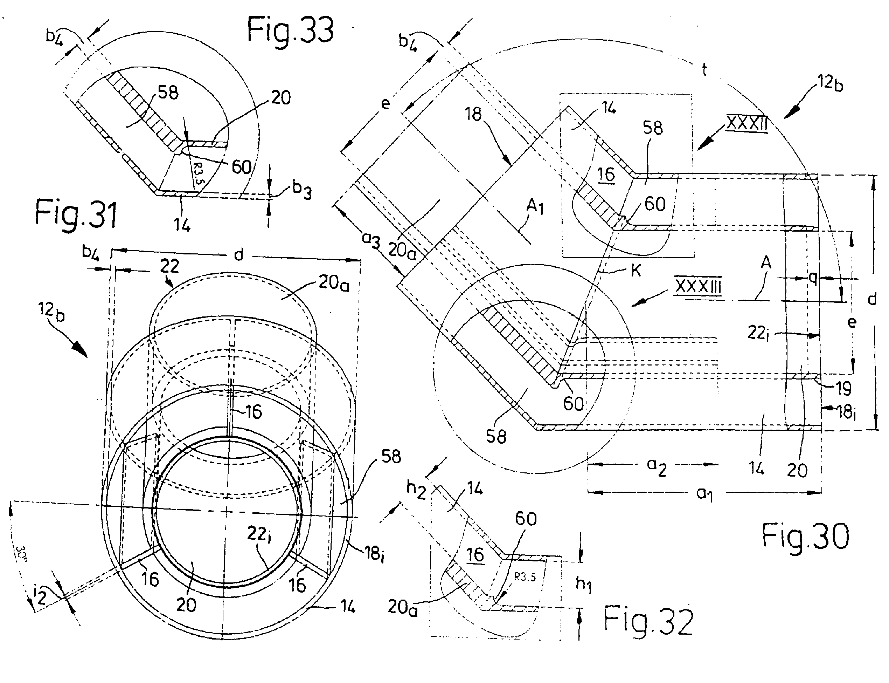

Der Winkel t zwischen den Achsen A, A₁ der Ausführung 12_{b} der Fig. 30 bis 33 beträgt 135°; dieser Doppelwandbogen 12_{b} ist also verhältnismäßig flach gehalten. Beim Rohrteil 20ₐ fehlt die Innenstufe 56, d.h. dessen Wandung ist bis zum Mündungsrand 22 von gleichbleibender Dicke b₄.

Insgesamt ergibt sich in allen oben beschriebenen Ausführungen eine stabile Rohreinheit 10.

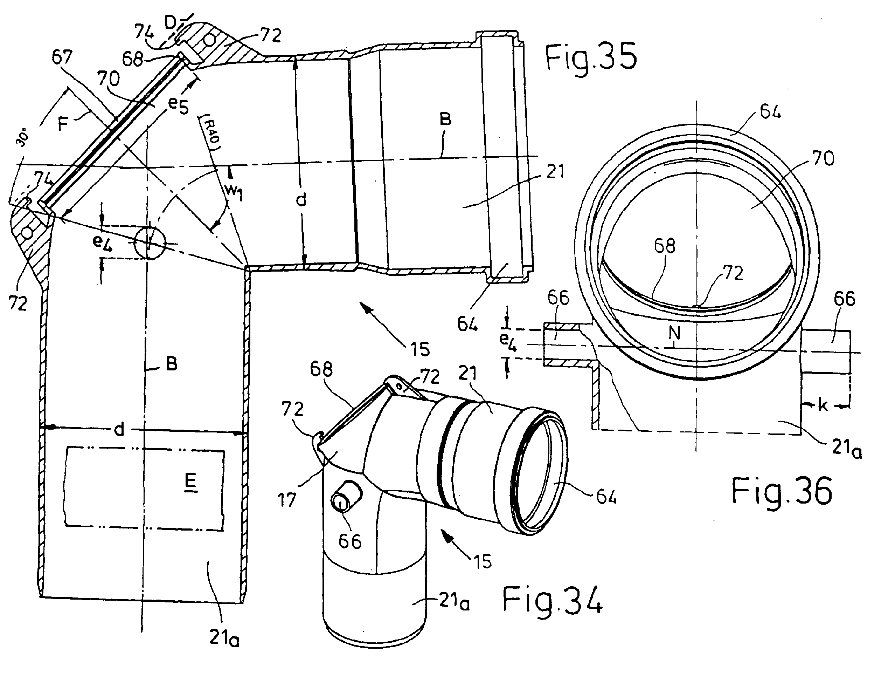

Gemäß Fig. 34 ist ein Rohrknie 15 aus zwei -- unter Zwischenschaltung eines zwickelartigen Knieabschnitts 17aneinandergeformten Rohrabschnitten 21, 21ₐ des Außendurchmessers d von etwa 75 mm einends mit einem radial nach außen abkragenden Muffenring 64 ausgestattet sowie unterhalb des im Knieabschnittes 17 mit von der Rohrwand abragenden Rohrstümpfen 66 des Innendurchmessers e₄ von 12 mm und einer Kraglänge k von 20 mm. Die Längsachsen B der Rohrabschnitte 21, 21ₐ verlaufen zueinander in nahezu rechtem Winkel, und eine der Längsachsen B wird von der gemeinsamen Achse N jener Rohrabschnitte 21, 21ₐ gekreuzt.

An der Heckseite des Knieabschnittes 17 des Rohrknies 15 ist ein -- von einem nach außen weisenden, mit einer inneren Ringnase 67 versehenen Kragen 68 umgebene -- runder Durchbruch 70 des Innendurchmessers e₅ von etwa 77 mm vorgesehen, dessen Durchbruchsachse F mit den Längsachsen B der Rohrabschnitte 21, 21ₐ gleiche Winkel w₁ von etwa 45° einschließt. Auf einer -- in der von den Längsachsen B bestimmten gemeinsamen Ebene E liegenden -- Durchmessergeraden oder Diametralen D des Durchbruches 70 ragen von den Rohrabschnitten 21, 21ₐ Formstege 72 auf, die zum Durchbruch 70 hin mit einer radialen Nase 74 versehen und dank dieser jeweils hakenartig ausgebildet sind.

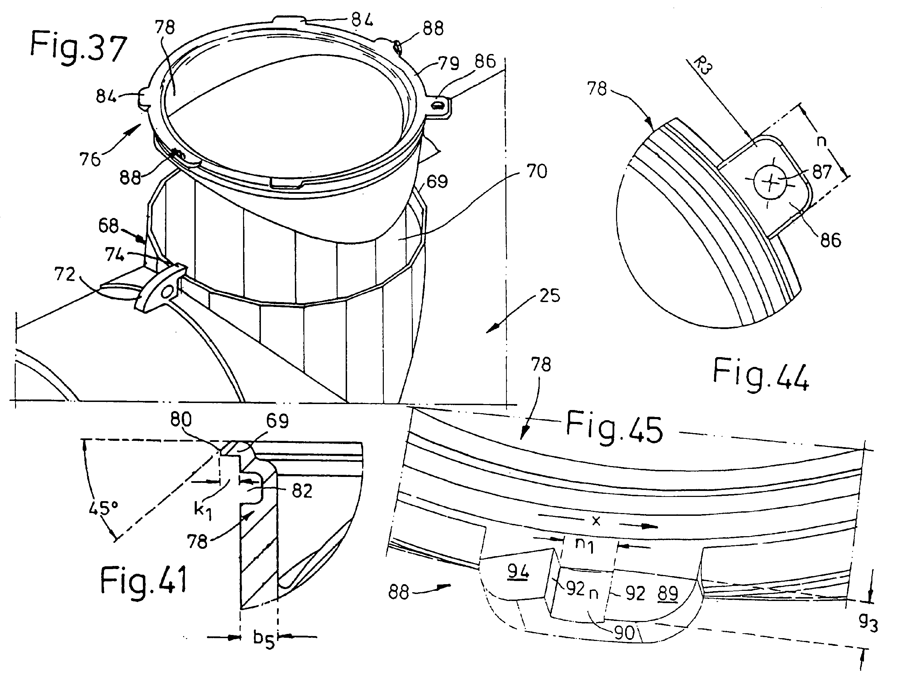

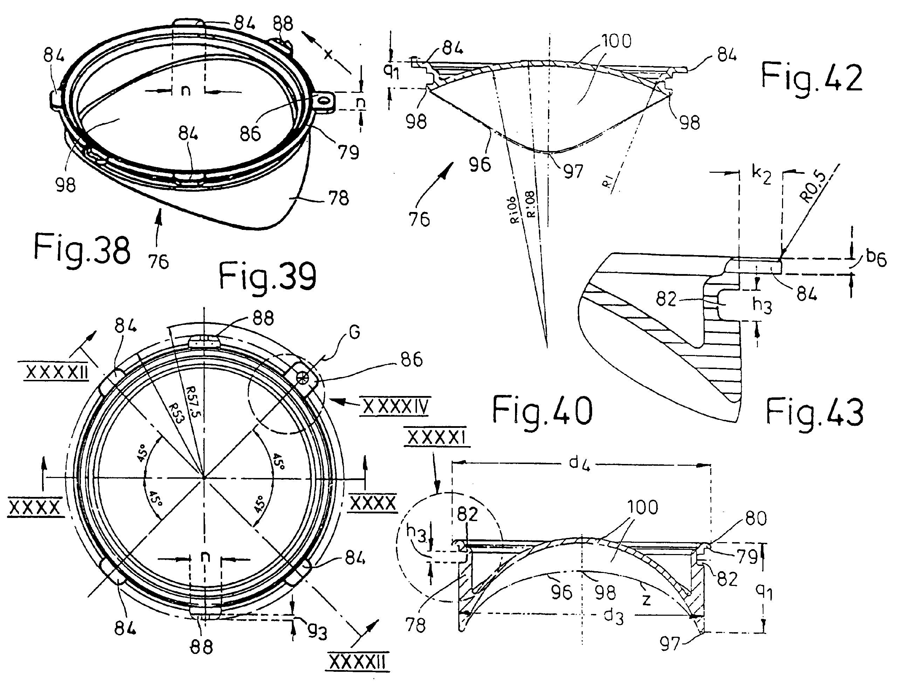

Nicht dargestellt ist in Fig. 34 bis 36 ein den Durchbruch 70 schließender Deckel 76. Letzterer ist aber Fig. 37, 38 ohne weiteres zu entnehmen. Der Deckel 76 überspannt in Fig. 37 einen Durchbruch 70, der in einem - der Führung eines gasartigen Strömungsmediums dienenden -- linearen Leitungsrohr 25 angebracht ist; dessen dünnwandiger Ringkragen 68 wird --entsprechend der Fig. 35 -- von den beiden auf der achsparallelen Diametralen angeordneten, den Deckel 76 in Schließstellung haltenden Formstegen oder Haken 72 flankiert. Deren Nasen 74 begrenzen mit der freien Kragenkante 69 einen Einschubspalt für den Deckel 76.

Vor allem aus Fig. 38, 39 geht hervor, dass die Form des Deckels 76 von einem querschnittlich kreisförmigen Deckelkragen oder Kragenring 78 des Außendurchmessers d₃ von 95 mm mit randwärts nach außen ragender Firstlippe 79 bestimmt wird; deren Außendurchmesser d₄ misst nahezu 100 mm. Diese Firstlippe 79 kragt gemäß Fig. 41 um ein Maß k₁ von etwa 3 mm vom Deckelkragen 78 der Wanddicke b₅ -- von hier 5 mmab und ist mit einer Pultfläche 80 versehen. Unterhalb des Kragenringes 78 des Deckels 76 findet sich eine äußere Ringnut 82 der Höhe h₃ von etwa 4 mm.

An der Firstlippe 79 ragen vom Deckelkragen oder Kragenring 78 radial nach außen auf sich rechtwinkelig kreuzenden Linien G und XXXXII - XXXXII (Fig. 39) drei Kraglaschen 84 der Breite n von 12 mm einer freien Kraglänge k₂ von etwa 6 mm und einer Dicke b₆ von 2 mm ab. Eine der Traglaschen 84 liegt auf Linie G der Fig. 39 einer in Fig. 42 verdeutlichten Grifflasche 86 jener Breite n mit mittigem Durchbruch 87 gegenüber. Zwischen dieser Grifflasche 86 und der einen auf jene Linie XXXXII - XXXXII liegenden Kraglasche 84 ist im Zenit der Fig. 39 eine Schließlasche 88 der Breite n sowie der radialen Kraglänge k₂ zu erkennen; deren Gestaltung kann vor allem der Fig. 45 entnommen werden. Ihre in Schließstellung vom Ringkragen 68 weg gerichtete Oberfläche 89 ist mit einer mittigen Radialnut 90 der Länge g₃ von 2 mm sowie jener Breite n₁ ausgestattet, deren eine Nutwand 92 niedriger ist als die andere Nutwand 92ₕ; von letzterer geht eine parallel zum Rand abfallende Pultfläche 94 aus. Um den Deckel 76 zu verschließen, wird dieser so auf den Ringkragen 68 gelegt, dass die beiden Schließlaschen 88 mit kurzer Drehung in Pfeilrichtung x unter die oben beschriebenen Nasen 74 der rohrseitigen Haken 72 geschoben werden können, bis diese Nasen 74 an der höheren Nutwand 92 anschlagen und in die Radialnut 90 einrasten.

Vergleicht man Fig. 40 und Fig. 42, wird deutlich, dass die Kragenhöhe q₁ unterschiedlich ist; der untere Rand 96 einer kalottenartigen Formhaube 100, die an den Deckelkragen 78 angeformt ist, beschreibt zwischen zwei einander diametral gegenüberliegenden Tiefpunkten 97 zwei nach oben verlaufende Teilkreiskonturen Z, die ihrerseits Hochpunkte 98 fixieren.

## Patentansprüche

1. Rohreinheit aus wenigstens zwei etwa koaxialen Leitungsrohren (14, 15, 20, 20ᵢ,24, 25, 28), von denen ein Leitungsrohr (28) zum Führen eines Strömungsmediums, insbesondere eines gasartigen Strömungsmediums, ausgebildet sowie als Innenrohr (15, 20, 20a, 25, 28), von einem Außenrohr (24) größeren Durchmessers umgeben und mit diesem koaxial zu einem doppelwandigen Rohr (30) durch zwischen Innen- und Außenrohr verlaufende Stegelemente (16, 16ₐ) zusammengefügt ist, wobei das doppelwandige Rohr mit einem ebenfalls doppelwandigen Knieabschnitt (12) verbunden ist sowie die Mündungsränder (24ᵢ; 29ᵢ; 18ᵢ; 22ᵢ) der koaxialen Rohrpaarungen (24, 28; 14, 20) aneinanderliegen und den beiden Innenrohren (20, 28) ein Dichtungsring (32) zugeordnet ist,
**dadurch gekennzeichnet,**
**dass** die Stegelemente als radiale rippenartige Rohrstege (16, 16ₐ) zwischen Außenrohr (14, 24) und Innenrohr (20, 20ₐ, 28) ausgebildet sind, die achsparallel zwischen den Rohrpartnern verlaufen sowie an diese angeformt sind, wobei der Dichtungsring (32) mit einem längsschnittlich U-förmigen Stülprand (38) versehen ist.

2. Rohreinheit nach Anspruch 1, **dadurch gekennzeichnet, dass** das Leitungsrohr als Innenrohr (28) das koaxiale Außenrohr (24) des doppelwandigen Rohres (30) um ein Maß (a) axial überragt und dieser Rohrteil (28ₐ) mit dem Dichtungsring (32) verbunden ist.

3. Rohreinheit nach Anspruch 2, **dadurch gekennzeichnet, dass** das Leitungsrohr als Innenrohr (28) am Übergang zu dem überragenden Rohrteil (28ₐ) mit einer Ringstufe (27) versehen und an dieser der überragende Rohrteil nach außen versetzt ist, wobei die Ringstufe (27) Anschlagfläche für den Dichtungsring (32) ist.

4. Rohreinheit nach Anspruch 3, **dadurch gekennzeichnet, dass** die Ringstufe (27) sowohl Anschlagflächen für den Dichtungsring (32) als auch für den Mündungsrand (22ᵢ) des anderen Innenrohres (20, 20ₐ) ist, welches partiell im Dichtungsring lagert.

5. Rohreinheit nach einem der Ansprüche 1 bis 4, **dadurch gekennzeichnet, dass** der Dichtungsring (32) an seinem dem Knieabschnitt (12) zugeordneten Ende mit dem längsschnittlich U-förmigen Stülprand (38) versehen ist und dieser den Mündungsrand (29) des Innenrohres (28) aufnimmt.

6. Rohreinheit nach Anspruch 5, **dadurch gekennzeichnet, dass** ein mit dem Stülprand (38) verbundener Ringkörper (34) des Dichtungsringes (32) außen- und/oder innenseitig zueinander versetzte Ringanformungen (36, 36ᵢ) aufweist.

7. Rohreinheit nach einem der Ansprüche 1 bis 6, **dadurch gekennzeichnet, dass** die beiden Außenrohre (14, 24) durch eine Schnappschelle (40) verbunden sind.

8. Rohreinheit nach einem der Ansprüche 1 bis 7, **dadurch gekennzeichnet, dass** das eine Innenrohr (20ₐ) des doppelwandigen Knieabschnitts (12) eine längsschnittliche Innenstufe (56) aufweist.

9. Rohreinheit nach Anspruch 7 oder 8, **dadurch gekennzeichnet, dass** die Schnappschelle (40) als offener Ring mit zwei radial abragenden Hakenenden (47, 50) ausgebildet ist, die in Verschlusslage einander hintergreifen, wobei das eine Hakenende ein Radialsteg (47) ist, der von einem Hakenkopf (50) eines zur Schellenebene nach außen versetzten Steges (51) hintergriffen ist.

10. Rohreinheit nach Anspruch 9, **dadurch gekennzeichnet, dass** das Hakenende (47) in Verschlusslage eine den Steg (51) fortsetzende Rückenleiste (52) der Pultfläche eines Ansatzes (54) des Radialsteges (47) aufliegt.

11. Rohreinheit nach einem der Ansprüche 1 bis 10, **dadurch gekennzeichnet, dass** das Leitungsrohr (15, 25) mit einem von einem Deckelelement (76) verschließbaren Durchbruch (70) versehen ist, der einen ringartigen Kragen (68) als Lager für das Deckelelement (76) aufweist, wobei dem Kragen (68) zumindest zwei Formstege (72) zugeordnet sind, die das Deckelelement (76) in seiner Schließlage wenigstens teilweise übergreifen.

12. Rohreinheit nach Anspruch 11, **dadurch gekennzeichnet, dass** der Formsteg (72) an die Außenfläche des Leitungsrohres (15, 25) angeformt sowie mit einer zum Durchbruch (70) weisenden Nase (74) versehen ist, die mit der Kragenkante (69) des Kragens (68) einen Spalt bildet und in Schließlage des Deckelelements (76) ein von diesem radial abragendes Kragorgan (78, 84, 88) haltend übergreift, und/oder, dass auf einer gemeinsamen Durchmessergeraden (D) des Durchbruchs (70) zwei liegende Formstege (72) liegen, wobei gegebenenfalls das Deckelelement (76) auf die freie Kragenkante (69) des Kragens (68) auflegbar sowie zwischen diese und die Nasen (74) der Formstege (72) einschiebbar ausgebildet ist.

13. Rohreinheit nach Anspruch 12, **dadurch gekennzeichnet, dass** das Kragorgan ein etwa ringförmiger Deckelkragen (78) oder dass das Kragorgan eine Kraglasche (84) ist.

14. Rohreinheit nach Anspruch 12 oder 13, **dadurch gekennzeichnet, dass** das Kragorgan eine Schließlasche (88) ist, von deren Oberfläche (89) eine radiale Anschlagwand (92ₙ) für den Formsteg (72) des Leitungsrohres (12, 25) aufragt, wobei gegebenenfalls in die Oberfläche (89) der Schließlasche (88) eine Radialnut (90) als Rastpartner für den Formsteg (72) eingeformt ist, deren Breite (n₁) etwa der Dicke des Formsteges entspricht sowie deren eine Nutwand die Anschlagwand (92ₙ) bildet, und/oder dass an die Anschlagwand (92ₙ) eine von dieser abwärts gerichtete Pultfläche (94) als Abschnitt der Oberfläche der Schließlasche (88) anschließt.

15. Rohreinheit nach einem der Ansprüche 1 bis 14, **dadurch gekennzeichnet, dass** das Deckelelement (76) mit einem in Draufsicht ringförmigen Deckelkragen (78) der maximalen Höhe (q₁) versehen ist, dessen rohrwärtiger Rand von zwei Teilkreiskonturen (Z) bestimmt ist, die von zwei etwa auf einer Diametralgeraden liegenden Tiefpunkten (97) ausgehen, wobei gegebenenfalls an den rohrwärtigen Rand des Deckelkragens (78) eine Formhaube (100) anschließt, die kalottenartig ausgebildet und vom Deckelkragen umgeben ist.

16. Rohreinheit nach Anspruch 15, **dadurch gekennzeichnet, dass** die Formhaube (100) im Zentrum des Deckelkragens (78) die Firstlippe (79) des Deckelelementes (76) überragt, wobei gegebenenfalls eine äußere Ringnut (82) des Deckelkragens (78) unterhalb von dessen Firstlippe (79) vorgesehen ist.

17. Rohreinheit nach einem der Ansprüche 1 bis 16, **gekennzeichnet durch** drei Kraglaschen (84) und eine Grifflasche (86), die am kreisförmigen oberen Rand des Deckelelements (76) in gleichen Kreisabständen verteilt angebracht sind.

18. Rohreinheit nach einem der Ansprüche 1 bis 16, **dadurch gekennzeichnet, dass** die Längsachsen (B) zweier Rohrabschnitte (21, 21ₐ) zueinander in einem Winkel verlaufen und in dem von ihnen gebildeten Rohrknie (15) ein zwickelartiger Knieabschnitt (17) an seiner Außenfläche mit dem Durchbruch (70) versehen ist, dessen Durchbruchsachse (F) mit den Längsachsen der beiden Rohrabschnitte jeweils einen Winkel (w₁) von etwa 45° bestimmt, wobei gegebenenfalls von jedem der Rohrabschnitte einer der Formstege (72) aufragt.

19. Rohreinheit nach Anspruch 18, **dadurch gekennzeichnet, dass** an einen der Rohrabschnitte (21ₐ) seitliche Rohrstümpfe (66) angeformt sind, deren gemeinsame Achse (N) die Längsachsen (B) eines der Rohrabschnitte (21, 21ₐ) quert.

## Claims

1. Pipe unit consisting of two or more approximately coaxial conducting pipes (14, 15, 20, 20ᵢ, 24, 25, 28), of which one conducting pipe (28) is designed to conduct a flow medium, in particular a gaseous flow medium, and as an inner pipe (15, 20, 20ₐ, 25, 28) is surrounded by an outer pipe (24) of larger diameter and assembled with the latter coaxially with a double-walled pipe (30) by web elements (16, 16ₐ) running between inner and outer pipes, wherein the double-walled pipe is connected to a bend section (12), also double-walled, and the orifice edges (24ᵢ; 29ᵢ; 18ᵢ; 22ᵢ) of the coaxial pipe pairs (24, 28; 14, 20) abut against each other and associated with the two inner pipes (20, 28) is a sealing ring (32), **characterised in that** the web elements are designed as radial, rib-like pipe webs (16, 16ₐ) between outer pipe (14, 24) and inner pipe (20, 20ₐ, 28) which run with parallel axes between the pipe couples and are moulded integrally with the latter, the sealing ring (32) being provided with an inverted edge (38) which is U-shaped in longitudinal section.

2. Pipe unit according to claim 1, **characterised in that** the conducting pipe as the inner pipe (28) protrudes axially by an amount (a) beyond the coaxial outer pipe (24) of the double-walled pipe (30), and this pipe portion (28ₐ) is connected to the sealing ring (32).

3. Pipe unit according to claim 2, **characterised in that** the conducting pipe as the inner pipe (28) is provided, at the junction with the protruding pipe portion (28ₐ), with an annular step (27), and at the latter the protruding pipe portion is offset outwardly, the annular step (27) being a stop face for the sealing ring (32).

4. Pipe unit according to claim 3, **characterised in that** the annular step (27) is both a stop face for the sealing ring (32) and a stop face for the orifice edge (22ᵢ) of the other inner pipe (20, 20ₐ) which is mounted partially in the sealing ring.

5. Pipe unit according to any of claims 1 to 4, **characterised in that** the sealing ring (32) at its end associated with the bend section (12) is provided with the inverted edge (38) which is U-shaped in longitudinal section, and the latter edge receives the orifice edge (29) of the inner pipe (28).

6. Pipe unit according to claim 5, **characterised in that** an annular body (34) of the sealing ring (32) which is connected to the inverted edge (38) has integrally moulded-on annular portions (36, 36ᵢ) offset from each other on the outside and/or inside.

7. Pipe unit according to any of claims 1 to 6, **characterised in that** the two outer pipes (14, 24) are connected by a snap-fit clamp (40).

8. Pipe unit according to any of claims 1 to 7, **characterised in that** one inner pipe (20ₐ) of the double-walled bend section (12) has an inner step (56) in longitudinal section.

9. Pipe unit according to claim 7 or 8, **characterised in that** the snap-fit clamp (40) is designed as an open ring with two radially projecting hook ends (47, 50) which engage behind each other in the locked position, one hook end being a radial web (47) behind which engages a hook head (50) of a web (51) which is offset outwardly from the plane of the clamp.

10. Pipe unit according to claim 9, **characterised in that** the hook end (47) in the locked position rests on a rear bar (52) continuing the web (51) on the top surface of an attachment (54) of the radial web (47).

11. Pipe unit according to any of claims 1 to 10, **characterised in that** the conducting pipe (15, 25) is provided with an aperture (70) which is closable by a cover element (76) and which has an annular collar (68) as a bearing for the cover element (76), wherein associated with the collar (68) are at least two moulded webs (72) which at least partially overlap the cover element (76) in its closed position.

12. Pipe unit according to claim 11, **characterised in that** the moulded web (72) is integrally moulded onto the outer surface of the conducting pipe (15, 25) and provided with a lug (74) which points towards the aperture (70) and which with the collar edge (69) of the collar (68) forms a gap and in the closed position of the cover element (76) overlaps and holds a protruding member (78, 84, 88) radially protruding from the cover element (76), and/or **in that** two horizontal moulded webs (72) lie on a common diametric straight line (D) of the aperture (70), wherein if occasion arises the cover element (76) can be laid on the free collar edge (69) of the collar (68) and is designed so that it can be inserted between this edge (69) and the lugs (74) of the moulded webs (72).

13. Pipe unit according to claim 12, **characterised in that** the protruding member is an approximately annular cover collar (78) or **in that** the protruding member is a protruding strip (84).

14. Pipe unit according to claim 12 or 13, **characterised in that** the protruding member is a closing strip (88) from the surface (89) of which a radial stop wall (92ₙ) for the moulded web (72) of the conducting pipe (12, 25) extends upwardly, wherein if occasion arises in the surface (89) of the closing strip (88) is formed a radial groove (90) as a latch partner for the moulded web (72), of which the width (n₁) approximately corresponds to the thickness of the moulded web and of which one groove wall forms the stop wall (92ₙ), and/or in that adjoining the stop wall (92ₙ) is a top surface (94) directed downwardly from the latter, as a section of the surface of the closing strip (88).

15. Pipe unit according to any of claims 1 to 14, **characterised in that** the cover element (76) is provided with a cover collar (78) of maximum height (q₁) which is annular in plan view and of which the edge towards the pipe is defined by two part-circle contours (Z) which start from two low points (97) lying approximately on a diametric straight line, wherein if occasion arises adjoining the edge of the cover collar (78) towards the pipe is a moulded hood (100) which is spherical cap-shaped and surrounded by the cover collar.

16. Pipe unit according to claim 15, **characterised in that** the moulded hood (100) at the centre of the cover collar (78) protrudes above the ridge lip (79) of the cover element (76), wherein if occasion arises an outer ring groove (82) of the cover collar (78) is provided below the ridge lip (79) thereof.

17. Pipe unit according to any of claims 1 to 16, **characterised by** three protruding strips (84) and a gripping strip (86) which are mounted on the circular upper edge of the cover element (76), distributed at equal circular intervals.

18. Pipe unit according to any of claims 1 to 16, **characterised in that** the longitudinal axes (B) of two pipe sections (21, 21ₐ) run at an angle to each other, and in the pipe bend (15) formed by them a gusset-like bend section (17) is provided on its outer surface with the aperture (70) of which the aperture axis (F) defines with the longitudinal axes of the two pipe sections in each case an angle (wᵢ) of about 45°, wherein if occasion arises one of the moulded webs (72) extends upwardly from each of the pipe sections.

19. Pipe unit according to claim 18, **characterised in that** on one of the pipe sections (21ₐ) are integrally moulded lateral pipe stubs (66) whose common axis (N) traverses the longitudinal axes (B) of one of the pipe sections (21, 21ₐ).

## Revendications

1. Unité de tubes comportant au moins deux conduites sensiblement coaxiales (14, 15, 20, 20ᵢ, 24, 25, 28) parmi lesquelles une conduite (28) est conçue pour guider un fluide, en particulier un fluide gazeux, et constitue un tube intérieur (15, 20, 20ₐ, 25, 28) entouré par un tube extérieur (24) de plus grand diamètre et assemblé coaxialement à celui-ci par l'intermédiaire d'éléments d'entretoise (16, 16ₐ), disposés entre le tube intérieur et le tube extérieur, pour former un tube à double paroi (30), ledit tube à double paroi étant assemblé à un coude (12) également à double paroi, et les bords d'ouverture (24ᵢ ; 29ᵢ ; 18ᵢ ; 22ᵢ) des paires de tubes (24, 28 ; 14, 20) coaxiaux étant en appui l'un contre l'autre et une bague d'étanchéité (32) étant associée aux deux tubes intérieurs (20, 28),
**caractérisée en ce que** les éléments d'entretoise sont conçus sous forme d'ailettes radiales (16, 16a) de type nervure entre le tube extérieur (14, 24) et le tube intérieur (20, 20ₐ, 28), qui s'étendent parallèlement à l'axe entre la paire de tubes et sont formées contre ceux-ci, la bague d'étanchéité (32) étant munie d'un bord embouti (38) en forme de U selon une coupe longitudinale.

2. Unité de tubes selon la revendication 1, **caractérisée en ce que** la conduite formant le tube intérieur (28) s'avance dans le sens axial sur une distance (a) au-delà du tube extérieur (24) coaxial du tube à double paroi (30), et cette partie de tube (28ₐ) est reliée à la bague d'étanchéité (32).

3. Unité de tubes selon la revendication 2, **caractérisée en ce que** la conduite formant le tube intérieur (28), au niveau de la transition vers la partie de tube (28ₐ) en saillie, comporte un épaulement annulaire (27) et est décalée vers l'extérieur au niveau de cet épaulement annulaire (27), celui-ci formant une surface de butée pour la bague d'étanchéité (32).

4. Unité de tubes selon la revendication 3, **caractérisée en ce que** l'épaulement annulaire (27) forme des surfaces de butée pour la bague d'étanchéité (32), ainsi que pour le bord d'ouverture (22ᵢ) de l'autre tube intérieur (20, 20ₐ), lequel est logé en partie dans la bague d'étanchéité (32).

5. Unité de tubes selon l'une quelconque des revendications 1 à 4, **caractérisée en ce que** la bague d'étanchéité (32), au niveau de son extrémité orientée vers le coude (12), comporte le bord embouti (38), en forme de U selon une coupe longitudinale, et ce dernier reçoit le bord d'ouverture (29) du tube intérieur (28).

6. Unité de tubes selon la revendication 5, **caractérisée en ce qu'**un corps annulaire (34) de la bague d'étanchéité (32), assemblé avec le bord embouti (38), comporte des éléments rapportés annulaires (36, 36ᵢ) décalés les uns par rapport aux autres du côté extérieur et/ou du côté intérieur.

7. Unité de tubes selon l'une quelconque des revendications 1 à 6, **caractérisée en ce que** les deux tubes extérieurs (14, 24) sont assemblés l'un à l'autre par un collier à encliquetage (40).

8. Unité de tubes selon l'une quelconque des revendications 1 à 7, **caractérisée en ce que** l'un des tubes intérieurs (20ₐ) du coude (12) à double paroi comporte un épaulement intérieur (56) selon une coupe longitudinale.

9. Unité de tubes selon la revendication 7 ou 8, **caractérisée en ce que** le collier à encliquetage (40) est conçu sous forme d'anneau ouvert avec des extrémités à crochet (47, 50) formant des saillies radiales, qui s'engagent l'une dans l'autre dans la position de fermeture, l'une des extrémités à crochet étant un rebord radial (47), derrière lequel s'engage une tête de crochet (50) d'un rebord (51) décalé vers l'extérieur par rapport au plan du collier.

10. Unité de tubes selon la revendication 9, **caractérisée en ce que**, dans la position de fermeture, la branche arrière (52), prolongeant le rebord (51) repose sur la surface inclinée d'une saillie (54) sur le rebord radial (47) de l'extrémité à crochet (47).

11. Unité de tubes selon l'une quelconque des revendications 1 à 10, **caractérisée en ce que** la conduite (15, 25) comporte une ouverture (70) qui peut être fermée par un élément de couvercle (76) et qui comporte un collet (68) annulaire formant un appui pour l'élément de couvercle (76), au moins deux brides profilées (72) étant associées au collet (68), lesquelles s'engagent au moins en partie sur l'élément de couvercle (76) dans la position de fermeture de celui-ci.

12. Unité de tubes selon la revendication 11, **caractérisée en ce que** la bride profilée (72) est formée sur la surface extérieure de la conduite (15, 25) et comporte un bec (74), qui est orienté vers l'ouverture (70) et qui forme une fente avec le bord (69) du collet (68) et, dans la position de fermeture de l'élément de couvercle (76), s'engage au-dessus d'un organe en porte-à-faux (78, 84, 88) en le retenant, lequel forme une saillie radiale sur ledit élément de couvercle, et/ou **en ce que** sur une droite diamétrale (D) commune de l'ouverture (70) sont disposées deux brides profilées (72) horizontales, l'élément de couvercle (76) pouvant être posé, le cas échéant, sur le bord libre (69) du collet (68) et étant réalisé de manière à pouvoir s'insérer entre ledit bord libre et le bec (74) de la bride profilée (72).

13. Unité de tubes selon la revendication 12, **caractérisée en ce que** l'organe en porte-à-faux est un collet de couvercle (78), sensiblement annulaire, ou en ce que l'organe en porte-à-faux est une patte en porte-à-faux (84).

14. Unité de tubes selon la revendication 12 ou 13, **caractérisée en ce que** l'organe en porte-à-faux est une patte de fermeture (88), sur la surface (89) de laquelle une paroi de butée (92ₙ) en saillie radiale est réalisée pour la bride profilée (72) de la conduite (12, 25), une rainure radiale (90) étant ménagée, le cas échéant, dans la surface (89) de la patte de fermeture (88) pour former une partie d'encliquetage complémentaire pour la bride profilée (72), la largeur (n₁) de ladite rainure étant égale à peu près à l'épaisseur de la bride profilée et l'une de ses parois formant la paroi de butée (92ₙ), et/ou **en ce que** contre la paroi de butée (92ₙ) est aboutée une surface inclinée (94), orientée vers le bas par rapport à ladite paroi de butée et formant une partie de la surface de la patte de fermeture (88).

15. Unité de tubes selon l'une quelconque des revendications 1 à 14, **caractérisée en ce que** l'élément de couvercle (76) comporte un collet de couvercle (78) annulaire, selon une vue en élévation, avec une hauteur maximale (q₁), dont le bord orienté vers le tube est défini par deux contours circulaires partiels (Z) qui partent de deux points bas (97) situés sensiblement sur une droite diamétrale, une coupole profilée (100) étant aboutée, le cas échéant, au bord du collet (78) orienté vers le tube, et étant réalisée en forme de calotte entourée par le collet de couvercle.

16. Unité de tubes selon la revendication 15, **caractérisée en ce que** la coupole profilée (100), au centre du collet de couvercle (78), s'engage au-dessus de la lèvre d'extrémité (79) de l'élément de couvercle (76), une rainure annulaire (82) extérieure étant prévue, le cas échéant, sur le collet de couvercle (78) en dessous de la lèvre d'extrémité (79).

17. Unité de tubes selon l'une quelconque des revendications 1 à 16, **caractérisée par** trois pattes en porte-à-faux (84) et une patte de préhension (86), qui sont réalisées sur le bord supérieur circulaire de l'élément de couvercle (76) à égale distance périphérique les unes des autres.

18. Unité de tubes selon l'une quelconque des revendications 1 à 16, **caractérisée en ce que** les axes longitudinaux (B) de deux tronçons de tube (21, 21a) sont agencés en angle l'un par rapport à l'autre et un coude (17), formant un coin dans le coude (15) formé par lesdits tronçons de tube, comporte sur sa face extérieure l'ouverture (70) dont l'axe (F) forme avec les axes longitudinaux des deux tronçons de tube respectivement un angle (w₁) de 45° environ, l'une des brides profilées (72) formant, le cas échéant, une saillie sur chacun des deux tronçons de tube.

19. Unité de tubes selon la revendication 18, **caractérisée en ce que** sur l'un des tronçons de tube (21a) sont formés des bouts de tube (66) latéraux, dont l'axe (N) commun croise les axes longitudinaux (B) de l'un des tronçons de tube (21, 21a).
